# EUROPEAN PATENT APPLICATION

(11) **EP 2 482 491 A1**
(43) Date of publication of application: **01.08.2012**
(21) Application number: 10818328.6
(22) Date of filing: 12.07.2010
(51) Int. Cl.: H04L 12/26

(54) **METHOD AND SYSTEM FOR CONFIGURING TELECOMMUNICATION DEVICE AND TELECOMMUNICATION DEVICE THEREOF**

(30) Priority: 24.09.2009 CN 200910176679
(71) Applicant: Huawei Technologies Co., Ltd., Shenzhen, Guangdong 518129 (CN)
(72) Inventor: ZHANG, Xubao, Shenzhen Guangdong 518129 (CN); NIU, Ye, Shenzhen Guangdong 518129 (CN); SONG, Xiaolin, Shenzhen Guangdong 518129 (CN)
(74) Representative: Isarpatent
(86) International application number: PCT/CN2010/075102
(87) International publication number: WO 2011/035634

(57) **Abstract**

The present invention provides a method and a system for configuring telecom device, and telecom device. The method includes: receiving configuration data and a first confirmed-commit operation command that are sent by a user, to perform a confirmed-commit operation; cancelling the confirmed-commit operation upon receiving a cancelling command sent by the user; storing the configuration data in a candidate configuration database; and receiving modified configuration data and a second confirmed-commit operation command to perform a new confirmed-commit, where the modified configuration data and the second confirmed-commit operation command are obtained after the user modifies the candidate configuration database. In the present invention, by cancelling the confirmed-commit operation and reserving the configuration candidate database, a mechanism to intervene the confirmed-commit operation initiatively is provided to the user to improve configuration efficiency, and relieve data transmission pressure.

## Description

This application claims priority to Chinese Patent Application No. 200910176679.9, filed with the Chinese Patent Office on September 24, 2009 and entitled "METHOD AND SYSTEM FOR CONFIGURING TELECOM DEVICE, AND TELECOM DEVICE", which is incorporated herein by reference in its entity.

### FIELD OF THE INVENTION

The present invention relates to the field of communication technologies, and in particular, to a method and a system for configuring telecom device through a network, and telecom device.

### BACKGROUND OF THE INVENTION

In the automatic configuration of network device, a network configuration protocol (Netconf, Network Configuration Protocol) is used as a basic configuration protocol for the telecom device. The protocol that is similar to a simple network management protocol (SNMP, Simple Network Management Protocol) may reduce network crash caused by improper configuration of the network device and reduce programming workload in the configuration process.

Telecom device receives, through the network configuration protocol, configuration information delivered by a user. To ensure correctness of the configuration information, the network configuration protocol provides a two-phase commit mechanism and a confirmed-commit (Confirmed-Commit) operation mechanism. The configuration information delivered by the user is stored in a candidate database (Candidate Data Base, CDB) of the device, without impacting the current running database (Running Data Base, RDB).

The telecom device performs confirmed-commit operation according to the candidate database. The user may observe the state of a service during the confirmed-commit operation to ensure correctness of the configuration information of the user and minimize impact on the current running services. Because the network configuration protocol stipulates a default timeout for the confirmed-commit operation, the telecom device will stop the confirmed-commit operation and the candidate database of the current confirmed-commit operation will be cleared if the default timeout is expired. Before the default timeout for the confirmed-commit operation is expired, if the user is satisfied with the confirmed-commit operation, the configuration will be confirmed as effective; however, if the user is not satisfied with the service in the confirmed-commit operation or for other reasons, the network configuration protocol allows the user to cancel the confirmed-commit operation, and the candidate database of the current confirmed-commit operation will be discarded.

During the confirmed-commit operation, the telecom device usually receives configuration information sent by the user for several times until the service of the confirmed-commit operation meets requirements completely. In the prior art, if the user modifies the configuration of the confirmed-commit operation, the candidate configuration database of the current confirmed-commit operation will be discarded, and the telecom device performs confirmed-commit operation again according to the configuration information resent by the user until the user's requirements are met. The method in the prior art requires the user to perform configuration again, with complicated operations and low efficiency. Moreover, the user commits a configuration of current confirmed-commit operation to be effect, and performs a next modification to the configuration, the current operation of the service will be impacted. The method is an insecure configuration method for the user, and cannot exert advantages of the two-phase commit mechanism of the network configuration protocol.

### SUMMARY OF THE INVENTION

Embodiments of the present invention provide a method and a system for configuring telecom device and telecom device, to solve the problem that modifying the configuration based on the network configuration protocol during confirmed-commit operation.

An embodiment of the present invention provides a method for configuring telecom device, including: receiving configuration data and a confirmed-commit operation command that are sent by a user, performing a confirmed-commit operation, cancelling the confirmed-commit operation upon receiving a cancelling command sent by the user, storing the configuration data in a candidate configuration database, receiving a modified configuration data and a confirmed-commit operation command, and performing a new confirmed-commit operation; where the modified configuration data and the confirmed-commit operation command are obtained by the user according to the candidate configuration database.

An embodiment of the present invention further provides telecom device, including:
an operation receiving module, configured to receive configuration data and a confirmed-commit operation command that are sent by a user, or receive modified configuration data and a confirmed-commit operation command; a cancellation receiving module, configured to receive a cancelling command for a confirmed-commit operation sent by the user and cancel the confirmed-commit operation; a storing module, configured to store the configuration data received by the operation receiving module in a candidate configuration database when the cancellation receiving module receives the cancelling command for the confirmed-commit operation; and an operation module, configured to perform the confirmed-commit operation according to the configuration data and the confirmed-commit operation command that are received by the operation receiving module, or perform a new confirmed-commit operation according to the modified configuration data and the confirmed-commit operation command that are received by the operation receiving module.

An embodiment of the present invention further provides a system for configuring telecom device, including: a client device, configured to send configuration data and a confirmed-commit operation command; and further configure to send a cancelling command for a confirmed-commit operation when a confirmed-commit operation state of the telecom device does not meet preset requirement, modify a current candidate configuration database of the telecom device, and send modified configuration data and a confirmed-commit operation command; and telecom device, configured to receive the configuration data and the confirmed-commit command that are sent by the client device, and perform the confirmed-commit operation; cancel the confirmed-commit operation upon receiving the cancelling command for the confirmed-commit operation sent by the client device, store the configuration data in the candidate configuration database, and receive the modified configuration data and the confirmed-commit operation command to perform a new confirmed-commit operation.

In the embodiments of the present invention, by cancelling the confirmed-commit operation and reserving the configuration candidate database, a method is provided to the user to intervene in the confirmed-commit operation initiatively so as to enhance configuration efficiency, correctness and integrity of the current configuration, and relieve data transmission pressure.

### BRIEF DESCRIPTION OF THE DRAWINGS

Accompanying drawings outlined below are used to provide further understanding of the embodiments of the present invention, and are parts of this application but shall not be construed as limitation on the present invention. In the accompanying drawings:
FIG. 1 is a flowchart of a method for configuring telecom device according to an embodiment of the present invention;
FIG. 2 is a flowchart of the method for configuring telecom device according to another embodiment of the present invention;
FIG. 3 is a schematic structural diagram of telecom device according to an embodiment of the present invention;
FIG. 4 is a schematic structural diagram of the telecom device according to another embodiment of the present invention;
FIG. 5 is a schematic diagram of a system for configuring telecom device according to an embodiment of the present invention; and
FIG. 6 is a schematic diagram of the system for configuring telecom device according to another embodiment of the present invention.

### DETAILED DESCRIPTION OF THE EMBODIMENTS

To make the objectives, technical solutions and merits of the present invention clearer, the following describes the embodiments of the present invention in more detail with reference to the embodiments and the accompanying drawings. The exemplary embodiments of the present invention and the description thereof are used to illustrate the present invention, and shall not be construed as limitation on the present invention.

### Embodiment 1

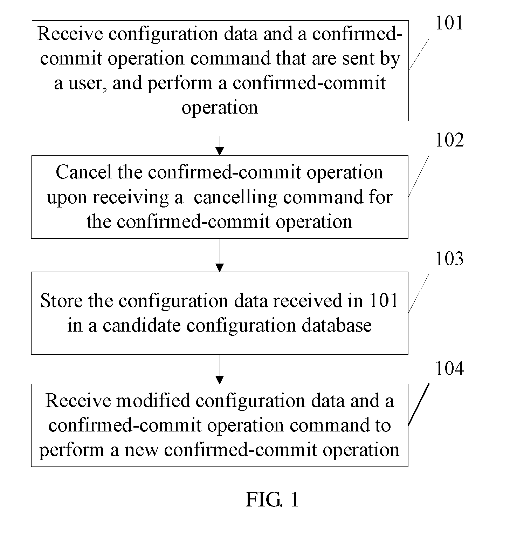

The embodiment 1 provides a method for configuring telecom device, as shown in FIG. 1. The method includes:
101: Receive configuration data and a confirmed-commit operation command that are sent by a user, and perform a confirmed-commit operation.

The user may send the configuration data and the confirmed-commit operation command through a packet such as an XML (Extensible Markup Language, extensible markup language) packet.
102: Cancel the confirmed-commit operation upon receiving a cancelling command for the confirmed-commit operation.

Optionally, in this embodiment of the present invention, a cancelling command for the confirmed-commit operation is received when a confirmed-commit operation state does not meet preset requirement of the user. The cancelling command for the confirmed-commit operation may be a packet such as an XML packet, in which a tag for cancelling the confirmed-commit operation includes but is not limited to a <discard-commit>, a <stop>, and an <undo-commit>, or may be defined according to actual needs.
103: Store the configuration data received in 101 in a candidate configuration database.
104: Receive modified configuration data and a confirmed-commit operation command to perform a new confirmed-commit operation.

The modified configuration data and the confirmed-commit command are obtained after the user modifies the current candidate configuration database stored in 103.

Optionally, in this embodiment, the modified configuration data may be all configuration data, or, may also be a portion of configuration data that at least includes the modified part.

Optionally, the configuration data and the confirmed-commit operation command that are sent by the user may also be received for several times when the confirmed-commit operation state of the telecom device does not meet the preset requirement.

Optionally, in this embodiment of the present invention, when the confirmed-commit operation state of the telecom device meets the preset requirement of the user, a command for committing configuration data sent by the user may also be received, and the telecom device is configured according to the configuration data.

In the embodiment of the present invention, through cancelling the confirmed-commit operation, the configuration efficiency is enhanced and the data transmission pressure is reduced; through reserving the configuration candidate database for pertinent modification and adjustment, correctness and integrity of the current configuration are enhanced.

### Embodiment 2

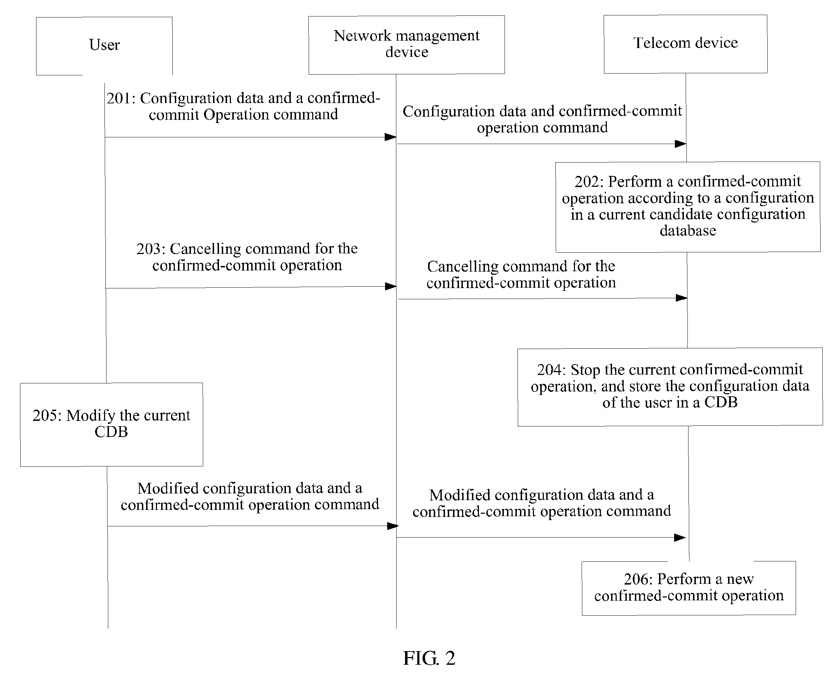

This embodiment further describes the method for configuring telecom device through a method for configuration among a user, network management device, and the telecom device. As shown in FIG. 2, the method includes:
201: The user sends configuration data and a confirmed-commit operation command to the telecom device through the network management device. The configuration data and the confirmed-commit operation command that are sent by the user may be packets such as XML packets.
202: The telecom device performs a confirmed-commit operation according to a configuration in a current candidate configuration database.
203: The user observes the confirmed-commit operation state of the telecom device. If the confirmed-commit operation state of the telecom device does not meet preset requirement of the user, the user sends a cancelling command for the confirmed-commit operation to the telecom device through the network management device, so as to cancel the confirmed-commit operation. The cancelling command for the confirmed-commit operation may be an XML packet, in which a tag for cancelling the confirmed-commit operation includes but is not limited to a <discard-commit>, a <stop>, and an <undo-commit>.
204: After receiving the cancelling command, the telecom device stops the current confirmed-commit operation, and stores the configuration data sent by the user in 201 in a CDB instead of deleting the configuration data. The state of the configuration data may be the same as the state before the previous confirmed-commit operation command is sent.
205: The user modifies the current candidate configuration database, and sends the modified configuration data and a confirmed-commit operation command upon completing the modification to the configuration.

Optionally, in this embodiment, the modified configuration data may be all configuration data, or may also be a portion of configuration data that at least includes the modified part.
206: The telecom device performs a new confirmed-commits operation. If the result of the confirmed-commit operation still does not meet the preset requirement of the user, repeat 202-205 until the configuration data meets preset requirement of the user.

Optionally, in this embodiment of the present invention, when the confirmed-commit operation state of the telecom device meets the preset requirement of the user, a command for committing configuration data sent by the user may also be received, and the telecom device is configured according to the configuration data.

In the embodiments of the present invention, by cancelling the confirmed-commit operation and reserving the configuration candidate database, a method is provided to the user to intervene in the confirmed-commit operation initiatively so as to enhance configuration efficiency, correctness and integrity of the current configuration, and relieve data transmission pressure.

### Embodiment 3

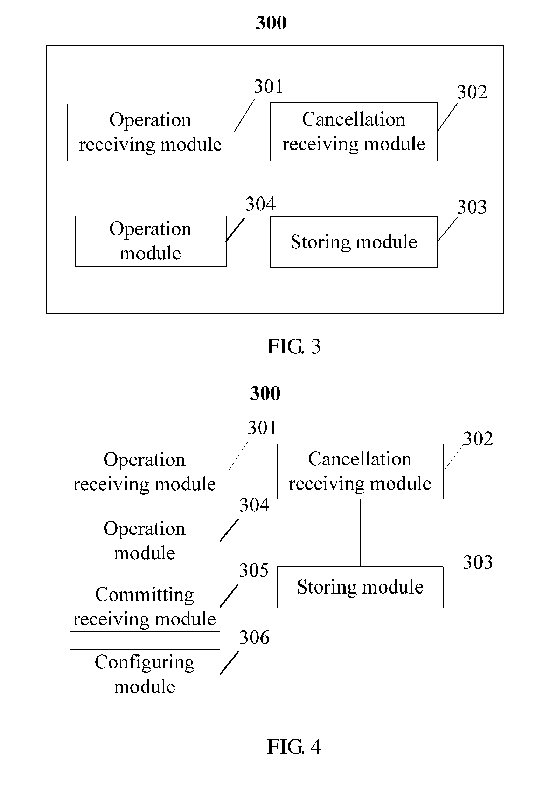

This embodiment provides a telecom device. As shown in FIG. 3, the telecom device 300 includes:
an operation receiving module 301, configured to receive configuration data and a confirmed-commit operation command that are sent by a user, or receive modified configuration data and a confirmed-commit operation command;
where the modified configuration data and the confirmed-commit operation command are those resent by the user when the operation state of the telecom device does not meet preset requirement of the user. The configuration data and the confirmed-commit operation command that are sent by the user may be packets such as XML packets;
a cancellation receiving module 302, configured to receive a cancelling command for the confirmed-commit operation sent by the user and cancel the confirmed-commit operation;
optionally, in this embodiment of the present invention, the cancelling command for the confirmed-commit operation is received when the confirmed-commit operation state does not meet the preset requirement of the user. The cancelling command may be a packet such as an XML packet, in which a tag for cancelling the confirmed-commit operation in the packet includes but is not limited to a<discard-commit>, a <stop>, and an <undo-commit>, or may be defined according to actual needs;
a storing module 303, configured to store the configuration data received by the operation receiving module 301 in a candidate configuration database when the cancellation receiving module 302 receives the cancelling command for the confirmed-commit operation.
an operation module 304, configured to perform the confirmed-commit operation according to the configuration data and the confirmed-commit operation command that are received by the operation receiving module 301, or perform a new confirmed-commit operation according to the modified configuration data and the confirmed-commit operation command that are received by the operation receiving module 301.

Optionally, in this embodiment, the modified configuration data may be all configuration data, or may also be a portion of configuration data that at least includes the modified part.

Optionally, when the confirmed-commit operation state of the telecom device still does not meet the preset requirement, the configuration data may also be modified for several times until the confirmed-commit operation state of the telecom device meets the preset requirement.

Optionally, as shown in FIG. 4, in the embodiment of the present invention, the telecom device may further include:
a committing receiving module 305, configured to receive a command for committing configuration data sent by the user when the confirmed-commit operation state of the telecom device meets the preset requirement of the user; and
a configuring module 306, configured to configure the telecom device according to the configuration data received by the committing receiving module 305.

In the embodiment of the present invention, through cancelling the confirmed-commit operation, the configuration efficiency is enhanced and the data transmission pressure is reduced; through reserving the configuration candidate database for pertinent modification and adjustment, correctness and integrity of the current configuration are enhanced.

### Embodiment 4

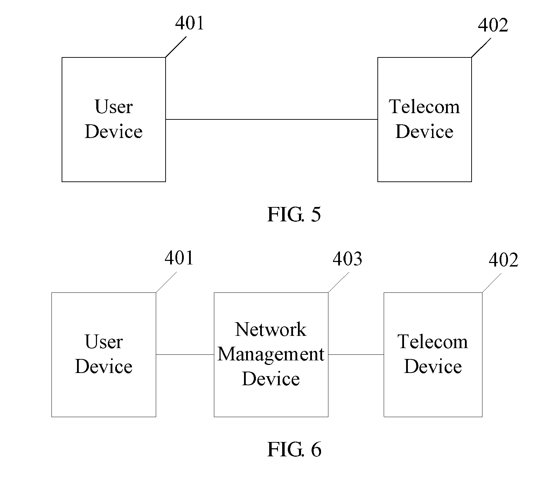

This embodiment provides a system for configuring telecom device. As shown in FIG. 5, the system includes:
a user device 401, configured to send configuration data and a confirmed-commit operation command; and, when a confirmed-commit operation state of a telecom device 402 does not meet preset requirement, send a cancelling command for the confirmed-commit operation, and resend modified configuration data and a confirmed-commit operation command;
where the configuration data and the confirmed-commit operation command that are sent by a user may be packets such as XML packets. The cancelling command may be a packet such as an XML packet, in which a tag for cancelling the confirmed-commit operation includes but is not limited to a <discard-commit>, a <stop>, and an <undo-commit>, or may be defined according to actual needs;
the telecom device 402, configured to receive the configuration data and the confirmed-commit operation command that are sent by the user device 401 to perform the confirmed-commit operation; and, when the confirmed-commit operation state does not meet the preset requirement of the user, receive the cancelling command for the confirmed-commit operation, cancel the confirmed-commit operation, store the configuration data in a candidate configuration database, and receive the modified configuration data and the confirmed-commit command to perform a new confirmed-commit operation.

In this embodiment, after the user device 401 sends the confirmed-commit operation command packet, the telecom device 402 performs the confirmed-commit operation according to the configuration in the current candidate configuration database. After receiving the command for cancelling the confirmed-commit operation, the telecom device 402 stops the current confirmed-commit operation, and stores the configuration data sent by the user in a CDB. The user device 401 modifies the current candidate configuration database, and sends the modified configuration data and the confirmed-commit operation command. The sending may be a packet as described above. The user checks whether the result of the confirmed-commit operation meets the preset requirement of the user again. If the result of the confirmed-commit operation does not meet the preset requirement of the user, the process of modifying the configuration and checking the confirmed-commit operation result is repeated until the configuration data meets the preset requirement of the user.

Optionally, as shown in FIG. 6, in the embodiment of the present invention, the system described above may further include:
a network management device 403, configured to transmit the configuration data, the confirmed-commit operation commands, and the cancelling command for the confirmed-commit, which are sent by the user device 401, to the telecom device 402.

In the embodiments of the present invention, by cancelling the confirmed-commit operation and reserving the configuration candidate database, a method is provided to the user to intervene in the confirmed-commit operation initiatively so as to enhance configuration efficiency, correctness and integrity of the current configuration, and relieve data transmission pressure.

The foregoing embodiments describe the objectives, technical solutions and beneficial effects of the present invention in more detail. It is understood that the preceding descriptions
are only some exemplary embodiments of the present invention, which shall not be constructed as limitations on the protection scope of the present invention. Any modification, equivalent replacement and variation within the spirit and scope of the present invention, shall fall within the protection scope.

## Claims

1. A method for configuring telecom device, comprising:
receiving configuration data and a confirmed-commit operation command that are sent by a user;
performing a confirmed-commit operation;
cancelling the confirmed-commit operation upon receiving a cancelling command sent by the user;
storing the configuration data in a candidate configuration database;
receiving modified configuration data and a confirmed-commit operation command; and
performing a new confirmed-commit operation; wherein
the modified configuration data and the confirmed-commit operation command are obtained by the user according to the candidate configuration database.

2. The method according to claim 1, wherein:
the receiving the configuration data and the confirmed-commit operation command that are sent by the user comprises: receiving the configuration data and the confirmed-commit operation command that are sent by the user through a network management device; and
the receiving the modified configuration data and the confirmed-commit operation command comprises: receiving the modified configuration data and the confirmed-commit operation command through the network management device.

3. The method according to claim 1 or 2, wherein:
the modified configuration data is all configuration data or modified configuration data.

4. The method according to claim 1 or 2, further comprising:
when a confirmed-commit operation state of the telecom device meets preset requirement of the user, receiving a command for committing configuration data sent by the user, and configuring the telecom device according to the configuration data.

5. A telecom device, comprising:
an operation receiving module (301), configured to receive configuration data and a confirmed-commit operation command that are sent by a user, or receive modified configuration data and a confirmed-commit operation command;
a cancellation receiving module (302), configured to receive a cancelling command for a confirmed-commit operation sent by the user and cancel the confirmed-commit operation;
a storing module (303), configured to store the configuration data received by the operation receiving module in a candidate configuration database when the cancellation receiving module receives the cancelling command for the confirmed-commit operation; and
an operation module (304), configured to perform the confirmed-commit operation according to the configuration data and the confirmed-commit operation command that are received by the operation receiving module, or perform a new confirmed-commit operation according to the modified configuration data and the confirmed-commit operation command that are received by the operation receiving module.

6. The telecom device according to claim 5, further comprising:
a committing receiving module (305), configured to receive a command for committing configuration data sent by the user when a confirmed-commit operation state of the telecom device meets the preset requirement of the user; and
a configuring module (306), configured to configure the telecom device according to the configuration data.

7. The telecom device according to claim 5 or 6, wherein:
the confirmed-commit operation command and the cancelling command are XML packets.

8. The telecom device according to claim 5 or 6, wherein:
the modified configuration data is all configuration data or modified configuration data.

9. A system for configuring telecom device, comprising:
a user device (401), configured to deliver configuration data and a confirmed-commit operation command; and, when a confirmed-commit operation state of a telecom device does not meet preset requirement, send a cancelling command for the confirmed-commit operation, modify a current candidate configuration database of the telecom device, and resend modified configuration data and a confirmed-commit operation command; and
the telecom device (402), configured to receive the configuration data and the confirmed-commit operation command that are sent by the user device to perform the confirmed-commit operation; and, when receiving the cancelling command for the confirmed-commit operation sent by the user device, cancel the confirmed-commit operation, store the configuration data in the candidate configuration database, and receive the modified configuration data and the confirmed-commit operation command to perform a new confirmed-commit operation.

10. The system according to claim 9, further comprising:
a network management device (403), configured to transmit the configuration data, the confirmed-commit operation commands, and the cancelling command for the confirmed-commit operation, which are sent by the user device, to the telecom device.
